Europäisches Patentamt

European Patent Office

Office européen des brevets

(11) Publication number: **0 230 108**
A1

# EUROPEAN PATENT APPLICATION

(21) Application number: 86309160.9

(22) Date of filing: 25.11.86

(51) Int. Cl.⁴: **A 01 G 9/24**, F 24 F 11/00

(30) Priority: 25.11.85 GB 8529021

(43) Date of publication of application: 29.07.87
Bulletin 87/31

(84) Designated Contracting States: NL

(71) Applicant: **BRITISH SOCIETY FOR RESEARCH IN
AGRICULTURAL ENGINEERING, Silsoe Bedfordshire
(GB)**

(72) Inventor: **Davis, Paul Frank, 6 High Street, Upper
Gravenhurst Bedfordshire MK45 4HY (GB)**

(74) Representative: **Cullis, Roger, Patent Department
National Research Development
Corporation 101 Newington Causeway, London SE1 6BU
(GB)**

(54) Ventilator control apparatus.

(57) Apparatus controlling the ventilation of a building, such as a greenhouse, having closable ventilators on opposing sides thereof, comprises a wind direction sensor to sense the direction of air movement relative to the building in which the controller is installed and a first and second ventilator-opening controllers for controlling the opening of the ventilators on opposing sides of the building. The ventilator controllers are adapted to adjust the opening of their respective ventilators in accordance with a predetermined algorithm so that the ventilator on the leeward side of the building opens prior to the ventilator on the windward side of the building.

- 1 -

129519

## VENTILATOR CONTROL APPARATUS

This invention relates to ventilation control apparatus and, in particular, to apparatus suitable for the control of greenhouse ventilators.

In a naturally-ventilated building, the ventilation adjustments required to keep the internal temperature constant depend on the solar heating, external air temperature and wind speed and direction. In a strong cold wind, small adjustments about a small aperture may be necessary because the proportion of heat transfer by ventilation rises sharply at small apertures. On calmer days, larger adjustments would be required to produce the same temperature corrections. , The optimum control action cannot be estimated unless the effects of these changes in the external environment are taken into account. A controller mechanism was devised which used a control algorithm which adapts to changes in the external environment by estimating a linear time series relationship between ventilator aperture by statistical analysis of successive samples thus avoiding the need to measure changes. This mechanism is described in J. Agric. Eng. Res. (1984) 29, 241-248 "A technique of adaptive control of the temperature in a greenhouse using ventilation adjustments" by P.F. Davis.

This controller suffered a number of disadvantages. When the controller adjusted the ventilators of a greenhouse, it adjusted them all by the same amount. It also caused excessive wear on the ventilator mechanism.

A controller mechanism has now been devised which overcomes these drawbacks. Inter alia, the new mechanism opens the leeward ventilators first as a precaution against damage to the crop by cold winds. Also the ventilators are now opened more cautiously when they have been shut for a long period, such as overnight, in case the wind has become much colder. Another modification was introduced in order to reduce wear of the ventilator mechanism, namely, in place of one set temperature for the controller, a band of temperatures can now be set in which very little ventilator adjustment is made. As an alternative there is now also provision for the mechanism control algorithm to follow a varying set point such as might be provided by a master controller.

According to the present invention here is provided apparatus for controlling the ventilation of a building having closable ventilators on opposing sides thereof comprising wind direction sensing means to sense the direction of air movement relative to a building in which said controller is installed, first ventilator opening control means for controlling the opening of the ventilators on one of said opposing sides of the building, second ventilator opening control means for controlling the opening of the ventilators on the other of said opposing sides of the building, wherein said first and said second ventilator control means are adapted to adjust the opening of their respective ventilators in accordance with a predetermined algorithm so that the ventilator on the leeward side of the building opens prior to the ventilator on the windward side of the building.

The algorithm soon learns how to provide good control of the temperature in any greenhouse, but to begin with the algorithm has no knowledge of how effective any ventilator adjustment would be in controlling the temperature and it needs some guidance as to what action would be reasonable. This information is then used by the algorithm whenever it cannot make a good estimate of appropriate control action, such as when the ventilators have been shut for a long time. Bounds can be imposed on the predicted parameter estimates with the aid of prior information, and initially these bounds are used in the estimation of control action.

It has been found that improved control results from the innovation opening the leeward ventilators before the windward ventilators. The sign of any odd function of the sine of the angle between the wind direction and the ridge of the greenhouse roof can be used to specify which set of ventilators are leeward, and which set are windward. Such a function can also be used to specify the percentage aperture of the leeward ventilators at which the windward ventilators start to open.

In one arrangement the leeward ventilators are opened fully before the windward ventilators. However, this suffers from an abrupt change in ventilator aperture that would have occurred whenever the wind direction wavered about a zero angle to the ridge of the greenhouse roof would have been unacceptable.

To avoid abrupt changes in ventilator aperture as the direction of the wind varies the aperture of the leeward ventilator at which the windward ventilator starts to open must be a smooth function of the angle between the wind direction and the ridge of the greenhouse roof. The sine of the angle is one such function and, moreover, it is proportional to the component of the air velocity perpendicular to the axis of the building which will normally be the ridge of the greenhouse roof from which the plants are shielded while the windward ventilators are shut. In the case of buildings without a ridge, the axis of the building will be in a direction parallel to the planes containing the ventilation openings, or if such planes are not co-directional, in a direction parallel to a plane bisecting two planes the first of which is in the average direction of the ventilators on the first side of the building and the second of which is in the average direction of the ventilators on the opposite side of the building.

Whenever the wind is parallel to the ridge of the greenhouse roof, preferably, all the ventilators open by the same amount simultaneously because there is then no distinction between leeward and windward. At any other angle of the wind, when the ventilators do not all open together, they need not all reach their maximum apertures at the same wind velocity. Advantageously all the ventilators reach their maximum apertures together.

Unfortunately, the imposition of a deterministic relationship between small adjustments of the leeward and windward ventilators when both sets are partially open inhibits the algorithm from learning the effects of separate movements of each set of ventilators. In order to overcome this difficulty, a scheme was adopted in which the apertures were related to each other through two variables which varied independently, and the algorithm learned the sensitivity of the greenhouse temperature to those variables instead.

Two independent variables, denoted by v and w, are defined in the equations below in terms of the fractional ventilator apertures. While the windward ventilators remain closed v is the fractional aperture of the leeward ventilators, and it reaches its maximum value when the windward ventilators are about to open. When the windward ventilators are open their fractional aperture combines vectorially with the additional aperture of the leeward ventilators to form a vector of magnitude w. If one imagines a graph of windward versus leeward aperture with the windward aperture as the ordinate then v can be represented by a vector parallel to the abscissa, and w can be represented by a vector inclined at an angle $\theta$ to the abscissa when $\theta$ is also defined below.

Required fractional leeward aperture: $u_v = v + w \cos\theta$

Required fractional windward aperture: $u_w = w \sin\theta$

for $0 < v < \sin\psi$   $w = 0$

for $0 < w < \mathrm{cosec}\,\theta$   $v = \sin\psi$

also $\cot\theta = 1 - \left| \sin\psi \right|$

where $\psi$ is the angle between the wind direction and the ridge of the greenhouse roof.

The ventilator adjustment mechanism will not instantaneously attain the apertures determined by the control algorithm, and so tha actual apertures will not always be the same as the required apertures.

In the earlier work the time-series formula on which the control action was based did not distinguish between leeward and windward ventilators. The original formula related the temperature deviation y from a reference temperature at any sampling instant k to the average fractional aperture of the ventilators since the previous sampling instant. In order to provide the required distinction, two new variates $\bar{v}$ and $\bar{w}$ are introduced which are related to average values of the fractional leeward and windward apertures. Suffices k or k-1 ar attached to the variates and parameters in the new time-series formula below indicate the sampling instants at which they were measured or estimated.

$$y_k + a_k y_{k-1} = b_{vk}\bar{v}_{k-1} + b_{wk}\bar{w}_{k-1} + c_k + d_k e_{k-1} + e_k \quad \text{where}$$

k is the number of the sampling instant.

y is the measured temperature deviation.

e is a normally distributed random error variate, e.g. measurement errors.

a, $b_v$, $b_w$, c, and d are parameters estimated by the algorithm. d was regarded as optional because it only makes a little difference to y.

$$\bar{v}_{k-1} = \bar{u}_{vk-1} - \bar{u}_{wk-1} \left(1 - \left| \sin\psi \right| \right)$$
$$\bar{w}_{k-1} = \bar{u}_{wk-1} \operatorname{cosec}\theta$$

$\bar{u}_{vk-1}$ is the average value of the leeward aperture between instants k and k-1.

$\bar{u}_{wk-1}$ is the average value of the windward aperture between instants k and k-1.

When an acceptable band of temperatures is prescribed instead of a set point the temperature deviation y is measured from the middle of the band.

In order to estimate the time-series parameter vector by means of a modified form of Kalman filter, an adaptation of the prior art method was employed. The use of two variables $\bar{v}$ and $\bar{w}$ in place of one ventilator aperture variable requires the addition of an extra element in the parameter vector. However, the need to make the control algorithm become cautious in the way it opens a ventilator after the ventilators have been shut for a long time introduced a further complication.

A parameter vector is defined as follows:

$$\phi_k^T = [a_k, b_{vk}, b_{wk}, c_k, d_k]$$

When both ventilators are closed the formula below is used for predicting the parameter vector as sampling. instant k when the temperature at sampling instant k-1 has been measured. This formula was chosen because it was easily incorporated in the Kalman filter.

$$\phi_{k/k-1} = F*\phi_{k-1} + G*$$

$\phi_{k-1}$ is the estimate of $\phi_{k-1}$ given $y_{k-1}$, $y_{k-2}$, etc.

$\phi_{k/k-1}$ is the estimate of $\phi_k$ from $\phi_{k-1}$.

F* and G* are diagonal matrices with non-zero second and third elements chosen in such a manner that over a chosen period of time successive estimates of the second and third elements of $\phi$ would tend towards prior estimates of their minimum values. Thus the algorithm gradually forgets the values of those elements at the time at which the ventilators are closed, and when eventually the ventilators open again they open very cautiously. The forgetting process must be slow as otherwise the performance of the algorithm is degraded.

The longer the ventilators remain shut the greater the uncertainty of what will be their effect on the greenhouse temperature when they open again, and the algorithm then needs to be prepared to make drastic changes to the estimated values of the second and third elements of $\phi$. To enable this to happen an estimate is kept of how much extra variance to assign to these elements in the Jazwinski algorithm use for adaption to parameter changes. To obtain that estimate a vector s with initially zero elements is updated according to the following formula while both ventilators are closed:

$$s_k = F*s_{-1} + G*$$

When the ventilators open against the square of s is taken as an indication of the additional variance to assign to the parameter estimates. This permits large changes in the estimated coefficients of v and w in the time-series formula, whereas the largest change is normally expected in the parameter c. It was realised that sometimes the ventilators might open briefly and then close again for a while, and so the current value of s is only halved whenever a sampling instant occurs with the ventilators open. Excessive corrections to the parameter estimates can result in the controller loosing its caution too quickly, and after a little experience with the algorithm only half the square of s was added to the parameter variance estimates.

At the opposite extreme when the ventilators remain fully open for a long period there is also an absence of information about the effect that subsequent adjustments to the ventilators might have on the greenhouse temperature. A reasonable assumption would be that the parameter values remain unchanged, and so there is no need to introduce any extra means to adjust their values. Nevertheless, the Kalman filter is faced with the estimation of parameters without sufficient information, and at first additional measures to prevent failure of the algorithm were envisaged; however, the ventilators have to close at night and so such failure is very unlikely. Detection of spurious negative estimates of parameter variances was included in order to permit the control mechanism to be automatically restarted with its initial data.

There are two further features of the control algorithm. Firstly, instead of aiming to keep the temperature at a set point it is possible to keep it within a specified band, and to restore it to the centre of the band if it appears to be drifting from the band. Secondly, different apertures may be prescribed for the leeward and windward ventilators.

The prior art control mechanism adjusted the ventilators to try to restore the temperature to a certain set point in a finite number of sampling intervals, where the number depended on the speed of response of the ventilator mechanism. This condition is now relaxed if the temperature is not deviating from a set range of temperatures. The centre of the range was used as a reference or set point and, for temperature drifts deviating from this reference but not deviating from the range, the controller aims only at asymptotic progress to the reference. If the temperature is within the range and drifting towards the centre of the range no new control action is prescribed. In simulated tests it was found that with a drift band the new controller frequently made no adjustment to the ventilators, and this resulted in a reduction of their total movement. It was still possible to control about a set point by making the lower and upper limits of the temperature drift band coincident.

99L

- 9 -

0230108

CLAIMS

1. Apparatus for controlling the ventilation of a building having closable ventilators on opposing sides thereof comprising wind direction sensing means to sense the direction of air movement relative to a building in which said controller is installed, first ventilator opening control means for controlling the opening of the ventilators on one of said opposing sides of the building, second ventilator opening control means for controlling the opening of the ventilators on the other of said opposing sides of the building, characterised in that said first and said second ventilator control means are adapted to adjust the opening of their respective ventilators in accordance with a predetermined algorithm so that the ventilator on the leeward side of the building opens prior to the ventilator on the windward side of the building.

2. Apparatus for controlling the ventilation of a building having closable ventilators on opposing sides thereof as claimed in Claim 1 characterised in that said first and said second ventilator control means are adapted to adjust the opening of their respective ventilators so that the aperture of the leeward ventilator at which the windward ventilator starts to open is a smooth function of the angle between the wind direction and the axis of the building.

3. Apparatus for controlling the ventilation of a building having closable ventilators on opposing sides thereof as claimed in Claim 2 characterised in that the gradient of said function is zero when the wind direction is parallel to the axis of the building.

4. Apparatus for controlling the ventilation of a building having closable ventilators on opposing sides thereof as claimed in Claim 3 characterised in that said function is proportional to the sine of the angle between the wind direction and the axis of the building.

5. Apparatus for controlling the ventilation of a building as claimed in any one of the preceding claims including means sensitive to the passage of time adpated to reduce the rate of opening of said ventilators in accordance with the length of time which has elapsed since the previous adjustment of the opening of said ventilators.

6. Apparatus for controlling the ventilation of a building as claimed in any one of the preceding claims characterised in that means are provided to reduce the sensitivity of said ventilator control means over a preset range of temperatures.

7. Apparatus for controlling the ventilation of a building as claimed in Claim 6 characterised in that said range of temperatures is itself adjustable.

99M

European Patent Office

EUROPEAN SEARCH REPORT

0230108

Application number

EP 86 30 9160

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 410 769 (R.E.H. SAILLY) * Page 1, left-hand column, paragraph 1; page 2, left-hand column, paragraphs 5-8; figures * | 1 | A 01 G 9/24<br>F 24 F 11/00 |
| A | | 2,7 | |
| X | FR-A-1 369 939 (K.N.M. PETERSEN) * Whole document * | 1 | |
| A | | 3 | |
| A | CH-A- 376 309 (GEBRÜDER GYSI AG) * Whole document * | 1,2 | |
| A | DE-A-2 915 260 (J. OBERBERGER GmbH & CO. MASCHINENBAU) | | TECHNICAL FIELDS SEARCHED (Int. Cl.4)<br><br>A 01 G<br>F 24 F<br>E 05 F<br>A 01 K<br>G 05 D |
| A | US-A-4 078 721 (S. OKUHARA) | | |
| A | DE-A-3 007 470 (B. SCHNEIDER) | | |

The present search report has been drawn up for all claims

| Place of search | Date of completion of the search | Examiner |
|---|---|---|
| THE HAGUE | 01-04-1987 | BORRELLI R.M.G.A. |